# NEW EUROPEAN PATENT SPECIFICATION

(11) **EP 1 118 490 B2**
(45) Date of publication and mention of the opposition decision: **21.09.2011**
(45) Mention of the grant of the patent: 21.11.2007
(21) Application number: 01200150.9
(22) Date of filing: 16.01.2001
(51) Int. Cl.: B60J 7/22

(54) **Open roof construction for a vehicle**
Konstruktion eines öffnungsfähigen Fahrzeugdaches
Construction de toit ouvrant pour véhicule

(30) Priority: 21.01.2000 NL 1014151
(43) Date of publication of application: 25.07.2001
(73) Proprietor: Inalfa Roof Systems Group B.V., 5804 AH Venray (NL)
(72) Inventor: Reivers, Petrus Gerardus Marie, 5944 BC Arcen (NL)
(74) Representative: Voncken, Bartholomeus Maria Ch.

(56) References cited:
- EP-A- 0 733 506
- DE-A- 2 357 906
- DE-A- 4 033 027
- DE-A1- 4 036 540
- DE-A1- 4 039 484
- DE-A1- 4 315 093
- DE-C1- 3 738 400
- DE-C1- 19 723 596
- FR-A1- 2 619 069
- US-A- 3 311 406

## Description

The invention relates to an open roof construction.

In an open roof construction of the type to which the present invention relates, which comprises a panel whose rear edge can be pivoted upward and downward (a so-called tilt panel), objectionable noises, in particular whistling noises, are produced in the open position of the panel. Said noises, which depend on the pivoting angle and the driving speed of the vehicle, among other things, are produced especially (but not exclusively) during the first stage of pivoting the panel from the closed position to an open position. The noises that are produced are highly objectionable to the occupants of the vehicle. The cause of said objectionable noises is to be found inter alia in the underpressure which is generated above the roof of the vehicle as a result of the air flow over the panel, which causes the air to be drawn out from the interior of the vehicle through the gap that is formed at the location of the upwardly pivoted rear edge of the panel.

In the past attempts have already been made to prevent the occurrence of said objectionable noises. Thus German patent no. 4016791 discloses an open roof construction for a vehicle in accordance with the preamble of the main claim, wherein the means for locally influencing the air flow are made up of a strip projecting downwards near the rear edge of the panel, on the free ends of which projections are present for influencing the air flow. The function of the strip provided with projections is to disturb coherent flow structures through the aforesaid gap. The means used in this prior art solution having a substantially two-dimensional shape (after all, with a minimum dimension in the direction of flow), whose dimension in a direction perpendicularly to the panel surface is considerable. Accordingly, one drawback of this prior art solution is the fact that the obstruction in the gap that is formed by said means needs to be compensated by a greater pivoting movement of the rear edge of the panel if it is desired to maintain an unchanged effective gap between the rear edge of the panel and the roof of the vehicle. Such increased pivotability, however, makes it necessary to adapt the technical construction of the panel (in particular the parts thereof that are to effect the movement of the panel) with all the concomitant drawbacks thereof (among which an increased space requirement for construction parts, higher cost, etc.).

It is an object of the present invention to provide an open roof construction of the type referred to in the introduction, by means of which the occurrence of objectionable noises can be prevented while avoiding the related drawbacks of the prior art.

In order to accomplish that objective, the open roof construction according to the invention is characterized in that said three-dimensional body consists of a tetrahedron, one surface of which coincides with the underside of the panel, with one corner point of said surface pointing in the direction of flow, or in a direction opposite thereto. In the former orientation of said surface, the tetrahedron has a windward surface, which surface diverges in the direction of flow with respect to the panel surface, with two mutually converging (in the direction of flow) leeward surfaces adjoining said surface. The transition edges between said one diverging surface and said two converging surfaces produce the swirling effect. In the other orientation there are two mutually diverging windward surfaces, and one leeward surface, which converges with respect to the panel surface.

In a preferred embodiment of the open roof construction according to the invention the height of the three-dimensional body, measured in a direction perpendicularly to the panel, is in the order of three times the thickness of the panel. In this way the obstruction of the flow that is caused by the three-dimensional body is minimized, so that hardly any adaptation of the pivoting height of the rear edge of the panel is required or desired, if at all.

Furthermore it is advantageous with regard to the generation of swirls if said three-dimensional body includes at least one windward surface (i.e. facing towards the air flow) and at least one leeward surface (i.e. facing away from the air flow). The generation of swirls will take place at the transition between the two surfaces.

There are several possibilities within this framework. One possible embodiment is characterized by the fact the three-dimensional body includes sharp transition edges between a respective windward surface and a respective leeward surface on its rear side, seen in the direction of flow, which edges include an angle with the direction of flow.

Partially as a result of said angle (which may have any desired value), swirls are generated in the air flow at the location of said sharp transition edges, which swirls lead to the formation of so-called vortex streets. The dimensions of said vortex streets depend on the location on the transition edge where the swirls are generated, so that a large range of frequencies (as regards the objectionable background noises that occur) is covered and such objectionable background noises can be prevented from occurring over the entire frequency range. Also the total swirling of the exiting air flow in the case of small panel openings contributes to this.

In another variant the three-dimensional body includes windward surfaces and leeward surfaces, which surfaces gradually blend into one another. A sharply defined transition edge is lacking in this variant, but the (gradual) transition between the two surfaces can nevertheless lead to the generation of swirls.

Generally a number of three-dimensional bodies will be arranged beside and/or behind each other. Said bodies may or may not be arranged adjacently to each other thereby.

It is possible to attach the aforesaid three-dimensional bodies to an existing panel afterwards, but it is also possible to form said bodies thereon during the production stage already. In the latter case it is preferable for the three-dimensional body to be integral with the panel. Thus the three-dimensional body may form part of the so-called panel encapsulation, which forms the underside (interior side) of the panel.

The invention will now be explained in more detail with reference to the drawing, which shows a number of embodiments of the open roof construction according to the invention.
Fig. 1 is a schematic side view of an embodiment of the open roof construction not belonging to the invention;
Fig. 2 is a larger-scale, perspective view of a detail of another embodiment not belonging to the invention;
Fig. 3 shows, likewise on a larger scale, a detail of an embodiment according to the invention;
Fig. 4 shows yet another embodiment not belonging to the invention;
Fig. 5 shows a variant of the embodiment of Fig. 2; and
Fig. 6 shows an embodiment not belonging to the invention which includes windward surfaces and leeward surfaces, which surfaces gradually blend into one another.

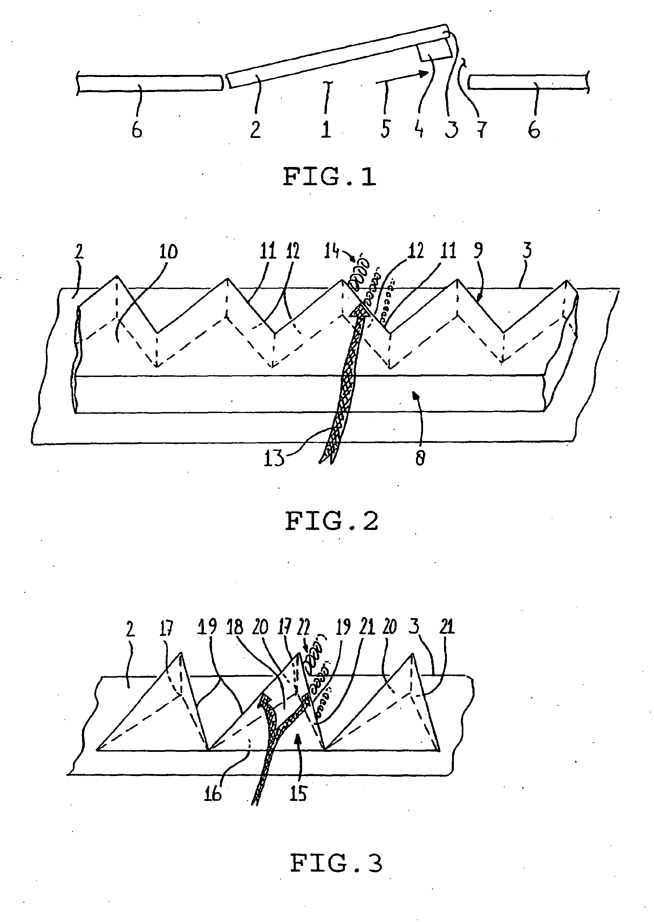

Fig. 1 shows an open roof construction for a vehicle, comprising a roof opening 1 which can be closed by means of a panel 2, whose rear edge 3 can be pivoted upward and downward. Means 4 for locally influencing the air flow 5 are provided on the underside of said panel, near said rear edge. Said air flow 5 is produced as a result of an underpressure being generated above roof 6, which causes air to be drawn from the interior of the vehicle through the gap 7 that is present between rear edge 3 of the panel and roof 6. The presence of said means 4 leads to the air flow 5 being locally influenced.

The detail views of Figs. 2 - 6 show the open roof construction in a direction obliquely upwards and rearwards (in the direction of rear edge 3) from a location under panel 2. Thus Fig. 2 shows the inner side of panel 2 and the rear edge 3 thereof. Disposed near rear edge 3 is a strip 8 extending substantially transversely to panel 2, which strip has a zigzag rear edge 9. The bottom face 10 of strip 8, which is shown on the upper side in Fig. 2, forms a windward surface, which is separated from leeward surfaces 12 on the rear side of strip 8. An arriving air flow 13 will cause swirls 14 at the location of transition edge 11. The magnitude of said swirls 14 depends on the location where they are generated. In the illustrated example the magnitude of the swirls over edge 11 increases towards the rear (in the direction of the rear edge 3 of panel 2).

The swirls being generated effectively prevent the production of objectionable background noises, such as whistling noises, at the location of gap 7.

Fig. 3 shows an embodiment of the open roof construction according to the invention. In a view comparable to that of Fig. 2 the three-dimensional bodies 15, in this case in the form of tetrahedrons, can be distinguished. A first surface 16 of each tetrahedron coincides with the underside of panel 2. A corner point 17 of said surface 16 points in the direction of flow (i.e. in the direction of the rear edge 3 of panel 2).

As a result of this orientation of tetrahedron 15, another surface 18 thereof forms a windward surface, which diverges with respect to panel 2 and which is separated from two leeward surfaces 20 and 21 by transition edges 19. Swirls 22 are generated at the transition edges 19, which swirls help to prevent objectionable background noises, such as whistling noises, being produced.

As the figure shows, several three-dimensional bodies may be arranged in side-by-side relationship on panel 2. In contrast to what the figure shows, it is not always necessary for said bodies to be placed adjacently to each other. Furthermore it is conceivable for such three-dimensional bodies to be arranged one behind another, seen in the direction of flow.

In one variant (not shown) the bodies are turned through 180 degrees, so that exactly the opposite side of the bodies faces towards the air flow (corner point 17 points in a direction opposed to the direction of flow). Surfaces 20 and 21 are the windward surfaces and surface 18 is the leeward surface in that case. Edges 19 continue to provide the swirling effect, however.

The height of the three-dimensional bodies, measured in a direction perpendicularly to the panel, is generally in the order to three times the thickness of panel 2.

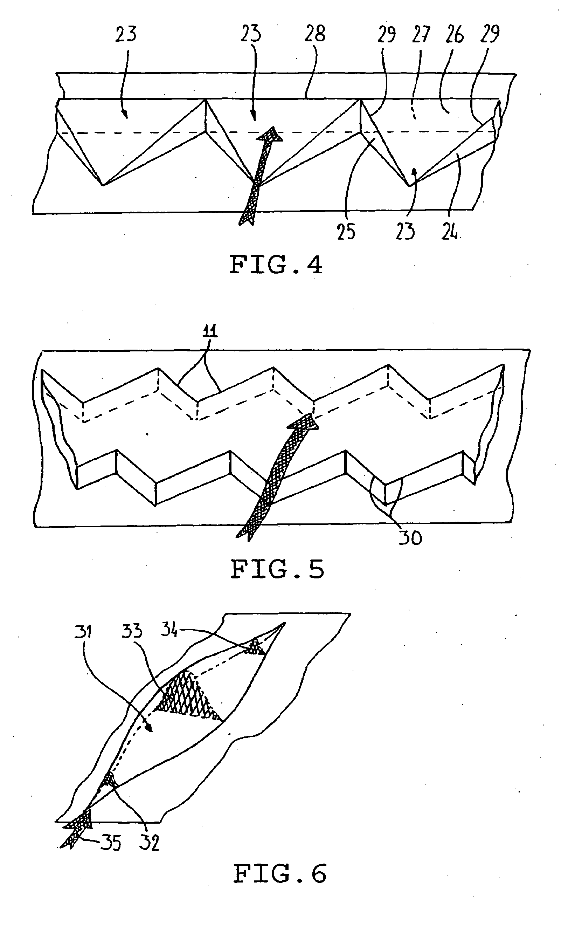

Fig. 4 shows three-dimensional bodies 23 not belonging to the invention arranged in side-by-side relationship, which bodies each include three windward surfaces 24-26 and one leeward surface 27. It is in particular the transition edge 28 between surfaces 26 and 27 that provides the swirling effect in this case, although it cannot be ruled out that also the transition edges 29 between the respective surfaces 24, 25 on the one hand and surface 26 on the other hand contribute thereto.

The variant according to Fig. 5, which is derived from that of Fig. 2, comprises a zigzag rear 11 edge 11 as well as a zigzag front edge 30. As a result, a certain swirling effect can also occur at the location of edge 30.

Fig. 6 finally shows an embodiment not belonging to the invention wherein there is no sharp transition between windward and leeward surfaces. In order to explain the shape of the three-dimensional body that is shown in Fig. 6, three sections 32-34 thereof are shown by way of illustration. The direction of flow is indicated by arrow 35. The transition between windward surfaces and leeward surfaces will be located near the place where the body has its largest cross-sectional area 33, and consequently the main part of the swirling effect will take place at that location.

## Claims

1. An open roof construction for a vehicle, comprising a roof opening (1) which can be closed by a panel (2) of which at least the rear edge (3) can be pivoted upward and downward, and wherein means (4) for locally influencing the air flow (5) are provided on the underside of said panel, near said rear edge (3), wherein said means (4) consist of at least one three-dimensional body (8, 15, 23, 31) for generating swirls (14) in the air flow (5), **characterized in that** said three-dimensional body consists of a tetrahedron (15,23), one surface of which coincides with the underside of the panel, with one corner point of said surface pointing in the direction of flow (5), or in a direction opposite thereto.

2. An open roof construction according to claim 1, **characterized in that** the height of the three-dimensional body (8, 15, 23, 31) measured in a direction perpendicularly to the panel (2), is in the order of three times the thickness of the panel (2).

3. An open roof construction according to claim 1 or 2, **characterized in that** said three-dimensional body (8, 15, 23, 31) includes at least one windward surface (18, 24, 25, 26) and at least one leeward surface (12, 20, 21, 27).

4. An open roof construction according to claim 3, **characterized in that** said three-dimensional body (8, 15, 23, 31) includes sharp transition edges (11, 19, 29, 30) between a respective windward surface (18, 24, 25, 26) and a respective leeward surface (12, 20, 21, 27) on its rear side, seen in the direction of flow, which edges include an angle with the direction of flow.

5. An open roof construction according to claim 3.
**characterized in that** the three-dimensional body (31) includes windward surfaces and leeward surfaces, which surfaces gradually blend into one another.

6. An open roof construction according to any one of the preceding claims, **characterized in that** a number of three-dimensional bodies (8, 15, 23, 31) are arranged beside and/or behind each other.

7. An open roof construction according to claim 6, **characterized in that** said three-dimensional bodies (8, 15, 23, 31) are arranged adjacently to each other.

8. An open roof construction according to any one of the preceding claims, **characterized in that** said three-dimensional body (8,15,23,31) is integral with said panel.

## Patentansprüche

1. Eine Offendach-Konstruktion für ein Fahrzeug, aufweisend eine Dachöffnung (1), welche von einem Paneel (2) geschlossen werden kann, von dem wenigsten der Rückwärtsrand (3) aufwärts und abwärts geschwenkt werden kann, und wobei Mittel (4) zum lokalen Beeinflussen der Luftströmung (5) auf der Unterseite des Paneels nahe dem Rückwärtsrand (3) vorgesehen sind, wobei die Mittel (4) mindestens einen dreidimensionalen Körper (8, 15, 23, 31) zum Erzeugen von Wirbeln (14) in der Luftströmung (5) aufweisen, **dadurch gekennzeichnet, dass** der dreidimensionale Körper aus einem Tetraeder (15, 23) besteht, wobei eine Fläche desselben mit der Unterseite des Paneels übereinstimmt, wobei eine Eckstelle der Fläche in Richtung der Strömung (5) oder in eine dazu entgegengesetzte Richtung zeigt.

2. Eine Offendach-Konstruktion gemäß Anspruch 1, **dadurch gekennzeichnet, dass** die Höhe des dreidimensionalen Körpers (8, 15, 23, 31), gemessen in Richtung senkrecht zum Paneel (2), im Bereich der dreifachen Dicke des Paneels (2) ist.

3. Eine Offendach-Konstruktion gemäß Anspruch 1 oder 2, **dadurch gekennzeichnet, dass** der dreidimensionale Körper (8, 15, 23, 31) mindestens eine Luvwärtsfläche (18, 24, 25, 26) und mindestens eine Leewärtsfläche (12, 20, 21, 27) aufweist.

4. Eine Offendach-Konstruktion gemäß Anspruch 3, **dadurch gekennzeichnet, dass** der dreidimensionale Körper (8, 15, 23, 31) scharfe Übergangsränder (11, 19, 29, 30) zwischen einer jeweiligen Luvwärtsfläche (18, 24, 25, 26) und einer jeweiligen Leewärtsfläche (12, 20, 21, 27) auf seiner Rückwärtsfläche gesehen in der Strömungsrichtung aufweist, wobei die Ränder einen Winkel mit der Strömungsrichtung einschießen.

5. Eine Offendach-Konstruktion gemäß Anspruch 3, **dadurch gekennzeichnet, dass** der dreidimensionale Körper (31) Luvwärtsflächen und Leewärtsflächen aufweist, wobei die Flächen allmählich ineinander übergehen,

6. Eine Offendach-Konstruktion gemäß einem der vorhergehenden Ansprüche, **dadurch gekennzeichnet, dass** eine Anzahl von dreidimensionalen Körpern (8, 15, 23, 31) nebeneinander und/oder hintereinander angeordnet sind.

7. Eine Offendach-Konstruktion gemäß Anspruch 6, **dadurch gekennzeichnet, dass** die dreidimensionalen Körper (8, 15, 23, 31) angrenzend zueinander angeordnet sind.

8. Eine Offendach-Konstruktion gemäß einem der vorhergehenden Ansprüche, **dadurch gekennzeichnet, dass** der dreidimensionale Körper (8, 15, 23, 31) mit dem Paneel einstückig ausgebildet ist.

## Revendications

1. Construction de toit ouvrant pour un véhicule, comprenant une ouverture de toit (1) qui peut être fermée par un panneau (2) dont au moins le bord arrière (3) peut être mis en pivotement vers le haut et vers le bas, et dans laquelle sont prévus des moyens (4) pour influencer localement l'écoulement d'air (5) sur le côté inférieur dudit panneau, à proximité dudit bord arrière (3),
où lesdits moyens (4) consistent en au moins un corps tridimensionnel (8, 15, 23, 31) pour générer des tourbillons dans l'écoulement, d'air (5), **caractérisée en ce que** ledit corps tridimensionnel consiste en un tétraèdre (15, 23) dont une surface coïncide avec le dessous du panneau, avec une arête de coin de ladite surface pointant dans la direction de l'écoulement (5) ou dans une direction opposée à celui-ci.

2. Construction de toit ouvrant selon la revendication 1,
**caractérisée en ce que** la hauteur du corps tridimensionnel (8, 15, 23, 31), mesurée dans une direction perpendiculaire au panneau (2), est de l'ordre de trois fois l'épaisseur du panneau (2).

3. Construction de toit ouvrant selon la revendication 1 ou 2,
**caractérisée en ce que** ledit corps tridimensionnel (8, 15, 23, 31) comprend au moins une surface contre le vent (18, 24, 25, 26) et au moins une surface sous le vent (12, 20, 21, 27).

4. Construction de toit ouvrant selon la revendication 3,
**caractérisée en ce que** ledit corps tridimensionnel (8, 15, 23, 31) comprend des bords de transition vifs (11, 19, 29, 30) entre une surface respective contre le vent (18, 24, 25, 26) et une surface respective sous le vent (12, 20, 21, 27) sur son côté arrière, vus dans la direction de l'écoulement, lesquels bords comprennent un angle formé avec la direction de l'écoulement.

5. Construction de toit ouvrant selon la revendication 3,
**caractérisée en ce que** le corps tridimensionnel (31) comprend des surfaces contre le vent et des surfaces sous le vent, lesquelles surfaces se fondent graduellement l'une dans l'autre.

6. Construction de toit ouvrant selon l'une quelconque des revendications précédentes, **caractérisée en ce qu'**un certain nombre de corps tridimensionnels (8; 15, 23, 31) sont disposés côte à côte ou l'un derrière l'autre.

7. Construction de toit ouvrant selon la revendication 6, **caractérisée en ce que** lesdits corps tridimensionnels (8, 15, 23, 31) sont disposés de façon contiguë entre eux.

8. Construction de toit ouvrant selon l'une quelconque des revendications précédentes, **caractérisée en ce que** ledit corps tridimensionnel (8, 15, 23, 51) est solidaire dudit panneau.
